Europäisches Patentamt

European Patent Office

Office européen des brevets

(19)

(11) EP 0 848 992 B1

(12) FASCICULE DE BREVET EUROPEEN

(45) Date de publication et mention
de la délivrance du brevet:
**27.03.2002 Bulletin 2002/13**

(51) Int Cl.$^7$: **B01J 23/85**, B01J 23/24,
C10G 49/02

(21) Numéro de dépôt: **97403047.0**

(22) Date de dépôt: **15.12.1997**

(54) **Catalyseur contenant du bore et du silicium et son utilisation en hydrotraitement de charges hydrocarbonées**

Bor und Silicium enthaltender Katalysator und Anwendung dieses in der Hydrobehandlung von Kohlenwasserstoffeinsätzen

Boron and silicon containing catalyst and its application in the hydrotreatment of hydrocarbon feeds

(84) Etats contractants désignés:
**DE ES FR IT NL**

(30) Priorité: **17.12.1996 FR 9615622**

(43) Date de publication de la demande:
**24.06.1998 Bulletin 1998/26**

(73) Titulaire: **INSTITUT FRANCAIS DU PETROLE**
**92852 Rueil-Malmaison Cedex (FR)**

(72) Inventeurs:
• **Kasztelan, Slavik**
**92500 Rueil Malmaison (FR)**
• **Mignard, Samuel**
**78400 Chatou (FR)**

• **Harle, Virginie**
**92500 Rueful Malmaison (FR)**
• **Marchal-George, Nathalie**
**75005 Paris (FR)**

(74) Mandataire: **Andréeff, François et al**
**Département Brevets,**
**Institut Français du Petrole,**
**1 & 4 avenue de Bois-Préau**
**92852 Rueil Malmaison (FR)**

(56) Documents cités:
EP-A- 0 517 300          FR-A- 2 092 667
FR-A- 2 347 097          US-A- 3 453 219
US-A- 4 724 226          US-A- 5 389 592

**Description**

La présente invention concerne un catalyseur d'hydroraffinage de charges hydrocarbonées, ledit catalyseur comprenant au moins un métal du groupe VIB (groupe 6 selon la nouvelle notation de la classification périodique des éléments : Handbook of Chemistry and Physics, 76ième édition, 1995-1996, intérieur 1ère page de couverture), de préférence le molybdène et le tungstène, et éventuellement au moins un métal du groupe VIII (groupes 8, 9 et 10) de ladite classification, de préférence le cobalt et le nickel, associé à une matrice poreuse qui peut être une matrice poreuse amorphe ou mal cristallisée (et généralement de type oxyde). Le catalyseur est caractérisé en ce qu'il renferme du silicium, du bore, éventuellement du phosphore, et éventuellement au moins un élément du groupe VIIA (groupe 17 des halogènes) et notamment le fluor.

La présente invention concerne également les procédés de préparation du dit catalyseur, ainsi que son utilisation pour l'hydrotraitement de charges hydrocarbonées telles que les coupes pétrolières, les coupes issues du charbon comprenant les réactions commes l'hydrogénation, l'hydrodéazotation, l'hydrodéoxygénation, l'hydrodésulfuration, l'hydrodémétallisation de charges hydrocarbonées contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrotraitement prend une importance de plus en plus grande dans la pratique du raffinage avec la nécessité croissante de réduire la quantité de soufre dans les coupes pétrolières et de convertir des fractions lourdes en fractions plus légères valorisables en tant que carburants. Ceci résulte d'une part de la demande croissante en carburants qui nécessite de convertir des bruts importés de plus en plus riches en fractions lourdes et en hétéroatomes, dont l'azote et le soufre, et d'autre part aux spécifications imposées sur les teneurs en soufre et en aromatiques dans divers pays pour les carburants commerciaux. Cette valorisation implique une réduction relativement importante du poids moléculaire des constituants lourds, qui peut être obtenue par exemple au moyen de réactions de craquage.

Les procédés actuels d'hydroraffinage catalytique utilisent des catalyseurs capables de promouvoir les principales réactions utiles à la mise en valeur des coupes lourdes, en particulier l'hydrogénation des noyaux aromatique (HAR), l'hydrodésulfuration (HDS) l'hydrodésazotation (HDN) et autres hydroéliminations.

L'hydroraffinage est employé pour traiter des charges telles que les essences, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytiques. Les composés hétérocycliques azotés rencontrés dans les fractions lourdes se comportent comme des poisons à la toxicité très marquée pour les catalyseurs de craquage ou d'hydrocraquage. En conséquence, la désazotation des charges d'hydrocraquage catalytiques constitue un des moyens possibles pour améliorer le rendement global de ces procédés, et il est alors souhaitable de diminuer au maximum la teneur en azote des charges avant de les craquer. Au moins une étape d'hydroraffinage est habituellement intégrée dans chacun des schémas connus de valorisation des coupes pétrolières lourdes.

Il est donc important d'augmenter l'activité en hydrotraitement des catalyseurs d'hydrotraitement. L'un des moyens consiste à acidifier la matrice sans empoisonner l'activité de la phase hydrogénante à base de métaux de transition.

L'invention concerne donc un catalyseur d'hydrotraitement de charges hydrocarbonées. Le catalyseur contient au moins un métal choisi dans le groupe VIB de la classification périodique des éléments, tel que le chrome, le molybdène et le tungstène, de préférence le molybdène et le tungstène, et éventuellement au moins un métal choisi dans le groupe VIII de ladite Classification, tels que fer, cobalt, nickel, ruthénium, rhodium, palladium, iridium, osmium et platine. Le catalyseur renferme au moins un support choisi dans le groupe constitué par les supports amorphes ou mal cristallisés. Le catalyseur est caractérisé en ce qu'on lui ajoute, après préparation de la masse catalytique renfermant le support et les métaux des groupes VIB et VIII du bore, du silicium, éventuellement du phosphore et éventuellement un élément du groupe VIIA, de préférence le fluor.

Ledit catalyseur présente une activité en hydrogénation des hydrocarbures aromatiques et en hydrodéazotation et en hydrodésulfuration plus importante que les formules catalytiques connues dans l'art antérieur renfermant de la silice $SiO_2$ et du bore comme décrit dans FR 2 092 667, US 5 389 592, EP 0 517 300 ou US 3 453 219. Sans vouloir être lié par une quelconque théorie, il semble que cette activité particulièrement élevée des catalyseurs de la présente invention est due aux renforcement de l'acidité du catalyseur par la présence conjointe du bore et du silicium sur la matrice ce qui induit d'une part une amélioration des propriétés hydrogénantes, hydrodésulfurantes, hydrodéazotantes et d'autre part une amélioration de l'activité par rapport aux catalyseurs utilisés habituellement dans les réactions d'hydrotraitement.

Le catalyseur de la présente invention renferme généralement en % poids par rapport à la masse totale du catalyseur au moins un métal choisi dans les groupes suivants et avec les teneurs suivantes :

- 3 à 60%, de préférence de 3 à 45% et de manière encore plus préférée de 3 à 30% d'au moins un métal du groupe VIB et,

- au plus 30%, de préférence de 0,1 à 25% et de manière encore plus préférée de 0,1 à 20% d'au moins un métal du groupe VIII.

A la masse catalytique ainsi préparée, au moins à partir d'un support choisi dans le groupe constitué par les matrices amorphe et les matrices mal cristallisées, on ajoute, ceci étant la caractéristique de l'invention

- 0,1 à 20%, de préférence de 0,1 à 15% et de manière encore plus préférée de 0,1 à 10% de bore.
- 0,1 à 20%, de préférence de 0,1 à 15% et de manière encore plus préférée de 0,1 à 10% de silicium. Les teneurs supérieures à 1,6% (1,6-10% notamment) sont souvent avantageuses.

et éventuellement,

- 0 à 20%, de préférence de 0,1 à 20 %, voire de 0,1 à 15% et de manière encore plus préférée de 0,1 à 10% de phosphore,

et éventuellement encore,

- 0 à 20%, de préférence de 0,1 20 %, voire de 0,1 à 15% et de manière encore plus préférée de 0,1 à 10% d'au moins un élément choisi dans le groupe VIIA (halogène), de préférence le fluor.

Les métaux du groupe VIB, du groupe VIII du catalyseur de la présente invention peuvent être présent en totalité ou partiellement sous la forme métallique et/ou oxyde et/ou sulfure.

Les catalyseurs selon l'invention peuvent être préparés par toutes méthodes adéquates. Mais il importe que le silicium et le bore soient introduits sur le catalyseur contenant déjà le support et le ou les métaux du groupe VIB et du groupe VIII. D'une façon préférée, un catalyseur, par exemple un catalyseur conventionnel d'hydrotraitement, de type NiMo ou NiMoP sur alumine ou de type CoMo ou CoMoP sur alumine est imprégné par une solution aqueuse de bore puis une solution aqueuse de silicium (ou l'inverse solution de silicium puis de bore) ou est imprégné de façon préférentielle par une solution aqueuse commune de bore et de silicium.

De façon plus particulière, le procédé de préparation du catalyseur de la présente invention comprend les étapes suivantes :

a) on sèche et on pèse un solide ci-après dénommé le précurseur, renfermant au moins les composés suivants : une matrice poreuse amorphe et/ou cristallisée, au moins un élément du groupe VIB, et au moins un métal du groupe VIII, éventuellement du phosphore, le tout étant de préférence mis en forme,

b) on imprègne le solide précurseur défini à l'étape a), par une solution aqueuse contenant du bore et du silicium et éventuellement au moins un élément du groupe VIIA, de préférence F,

c) on laisse reposer le solide humide sous une atmosphère humide à une température comprise entre 10 et 80°C,

d) on sèche le solide humide obtenu à l'étape b) à une température comprise entre 60 et 150°C,

e) on calcine le solide obtenu à l'étape c) à une température comprise entre 150 et 800°C.

Le précurseur défini à l'étape a) ci-dessus peut être préparé selon les méthodes classiques de l'homme du métier.

L'étape b) nécessite de disposer d'une solution aqueuse contenant du bore et du silicium et donc est différente des méthodes classiques de dépôt du B et du Si connues de l'homme du métier. Une méthode préférée selon l'invention consiste à préparer une solution aqueuse d'au moins un sel de bore tel que le biborate d'ammonium ou le pentaborate d'ammonium en milieu alcalin et en présence d'eau oxygénée et d'introduire dans la solution un composé du silicium de type silicone et à procéder à une imprégnation dite à sec, dans laquelle on remplit le volume des pores du précurseur par la solution contenant le B et le Si. Cette méthode de dépôt du B et du Si est meilleure que la méthode conventionnelle employant une solution alcoolique d'acide borique ou une solution d'orthosilicate d'éthyle dans l'alcool.

Le P, B, Si et l'élément choisi parmi les ions halogénures du groupe VIIA, peuvent être introduits par une ou plusieurs opérations d'imprégnation avec excès de solution sur le précurseur calciné.

Ainsi, dans le cas préféré où par exemple le précurseur est un catalyseur de type nickel-molybdène supporté sur alumine, il est possible d'imprégner ce précurseur par une solution aqueuse de biborate d'ammonium et de silicone Rhodorsil E1P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mises en oeuvre pour obtenir le catalyseur de la présente invention.

Ainsi, il est possible d'imprégner dans un premier temps la solution contenant le silicium, de sécher, de calciner et d'imprégner la solution contenant le bore, de sécher et de procéder à une calcination finale.

Il est également possible d'imprégner le précurseur dans un premier temps avec la solution contenant le bore, de sécher, de calciner et d'imprégner avec la solution contenant le silicium, de sécher et de procéder à une calcination finale.

Il est aussi possible d'imprégner dans un premier temps le précurseur avec une solution contenant du phosphore, de sécher, de calciner puis d'imprégner le solide obtenu avec la solution contenant le bore, de sécher, de calciner et d'imprégner la solution contenant le silicium, de sécher et de procéder à une calcination finale.

Dans le cas où les métaux sont introduits en plusieurs imprégnations des sels précurseurs correspondants, une étape de séchage intermédiaire du catalyseur est généralement effectuée à une température généralement comprise entre 60 et 250°C.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si $(OEt)_4$, les siloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool.

La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool.

Les source d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de la présente invention peut renfermer un métal du groupe VIII tel que fer, cobalt, nickel. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène. Il est également possible d'utiliser des associations de trois métaux par exemple nickel-cobalt-molybdène.

Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

Le catalyseur de la présente invention renferme donc également au moins une matrice minérale poreuse habituellement amorphe ou mal cristallisée. Cette matrice est habituellement choisie dans le groupe formé par l'alumine, la silice, les silice-alumine, la magnésie, l'oxyde de titane ou l'oxyde de zirconium, ou un mélange d'au moins deux des oxydes cités ci dessus. On peut choisir également les aluminates. On préfère utiliser des matrices contenant de l'alumine, sous toutes ces formes connues de l'Homme du métier, par exemple l'alumine gamma.

On peut aussi avantageusement utiliser des mélanges d'alumine et de silice, des mélanges d'alumine et de silice-alumine et des mélanges d'alumine et d'oxyde de bore.

On peut aussi avantageusement utiliser des mélanges d'alumine et d'argile et des mélanges de silice-alumine et d'argile.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

Les catalyseurs obtenus par la présente invention sont mise en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 $m^2$/g, un volume poreux mesuré par porosimétrie au mercure compris entre 0,2 et 1,5 $cm^3$/g et une distribution en taille de pores pouvant être monomodale, bimodale ou polymodale.

Les catalyseurs obtenus par la présente invention sont utilisés pour l'hydrotraitement de charges hydrocarbonées telles que les coupes pétrolières, les coupes issues du charbon comprenant les réactions telles que l'hydrogénation, l'hydrodéazotation, l'hydrodéoxygénation, l'hydrodésulfuration de charges hydrocarbonées contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre. Dans ces utilisations, les catalyseurs obtenus par la présente invention présentent une activité améliorée par rapport à l'art antérieur.

Les charges employées dans le procédé sont des essences, des gazoles, des gazoles sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement au moins un métal.

Les conditions de l'hydrotraitement telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,05 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'azote et d'hydrogène sulfuré à une température comprise entre 150 et 800°C, de préférence entre 250 et 600°C, généralement dans une zone réactionnelle à lit traversé.

Les résultats qui importent au raffineur sont notamment l'activité en HDS, en HDN, en HDM et en conversion. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que l'activité peut être augmentée par une élévation de température, mais c'est souvent au détriment de la stabilité du catalyseur. La stabilité ou durée de vie s'améliore avec une augmentation de la pression ou du taux de recyclage d'hydrogène, mais ceci se fait au détriment de l'économie du procédé.

Hydrodésulfuration d'essence

Le catalyseur de la présente invention peut être avantageusement employé pour l'hydrodésulfuration de coupes de type essence afin d'en réduire la teneur en soufre et de satisfaire aux normes de teneur en soufre dans les esssences. Les charges traitées ont des points d'ébullition initiaux d'au moins 25°C, de préférence au moins 30°C, et plus avantageusement c'est une coupe bouillant entre 30 et 280°C.

Dans ce mode d'hydrotraitement souvent appelé hydrodésulfuration d'essence, prétraitement de charge de reformage catalytique ou hydrodésulfuration d'essence de craqueur catalytique fluide, le catalyseur selon l'invention est employé à une température en général supérieure ou égale à 200°C, généralement d'au plus 400. La pression est en général supérieure à 0,1 MPa et de préférence supérieure à 0,2 MPa. La quantité d'hydrogène est au minimum de 50 normaux litre d'hydrogène par litre de charge et souvent comprise entre 50 et 1000 normaux litre d'hydrogène par litre de charge. La vitesse volumique horaire est comprise en général entre 1 et 20h$^{-1}$ et de préférence 2-20h$^{-1}$. Dans ces conditions, les catalyseurs de la présente invention contenant du cobalt, du molybdène, du bore et du silicium présentent une meilleure activité en hydrodésulfuration que les catalyseurs contenant du cobalt et du molybdène mais ne contenant pas les deux éléments bore et silicium comme le montre l'exemple 19.

EP 0 848 992 B1

Hydrodésulfuration de gazole

Le catalyseur de la présente invention peut être avantageusement employé pour l'hydrodésulfuration de coupes de type gazole afin d'en réduire la teneur en soufre et de satisfaire aux normes de teneur en soufre. Les charges hydrocarbonées traitées ont des points d'ébullition initiaux d'au moins 80°C, et plus avantageusement c'est une coupe bouillant entre 150 et 480°C.

Dans ce mode d'hydrotraitement souvent appelé hydrodésulfuration de gazole, le catalyseur selon l'invention est employé à une température en général supérieure ou égale à 250°C, généralement d'au plus 450°C, et souvent comprise entre 280°C et 430°C. La pression est en général supérieure à 0,2MPa et de préférence supérieure à 0,5 MPa. La quantité d'hydrogène est au minimum de 50 normaux litre d'hydrogène par litre de charge et souvent comprise entre 80 et 1000 normaux litre d'hydrogène par litre de charge. La vitesse volumique horaire est comprise en général entre 0,1 et 20h$^{-1}$ et de préférence 0,5-15h$^{-1}$. Dans ces conditions, les catalyseurs de la présente invention contenant du cobalt, du molybdène, du bore et du silicium présentent une meilleure activité en hydrodésulfuration que les catalyseurs contenant du cobalt et du molybdène mais ne contenant pas les deux élements bore et silicium comme le montre l'exemple 15.

Hydrogénation d'aromatiques dans les gazoles

Le catalyseur de la présente invention peut être avantageusement employé pour l'hydrogénation des aromatiques de diverses coupes hydrocarbonées à faible teneur en soufre et par exemple préalablement déjà hydrodésulfurées. Les charges traitées sont des charges dont le point initial de distillation est supérieur à 80°C et inférieur à 580°C. Elle contiennent 1 à 2000 ppm en poids de soufre et de préférence 2 à 1500 ppm S. Ce type d'hydrotraitement est particulièrement intéressant pour réduire la teneur en aromatique dans les charges de type gazole léger et lourds.

Dans ce mode d'hydrotraitement, le catalyseur selon l'invention est alors employé à une température en général supérieure ou égale à 280°C, généralement d'au plus 420°C, et souvent comprise entre 300°C et 400°C. La pression est en général supérieure à 1MPa, et de préférence supérieure à 3 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10h$^{-1}$ et de préférence 0,2-5h$^{-1}$. Dans ces conditions, les catalyseurs de la présente invention contenant du molybdène, du nickel, du bore et du silicium présentent une meilleure activité en hydrogénation d'aromatiques que les catalyseurs ne contenant pas les deux éléments bore et silicium comme indiqué dans l'exemple 16.

Hydrotraitement de distillats sous vide

Le catalyseur de la présente invention peut être avantageusement employé pour l'hydrotraitement de coupes de type distillats sous vide fortement chargées en soufre et azote afin d'en réduire les teneurs en soufre et surtout en azote. Les charges hydrocarbonées traitées ont des points d'ébullition initiaux d'au moins 250°C, de préférence au moins 300°C, et plus avantageusement c'est une coupe bouillant entre 330°C et 650°C. Ce type d'hydrotraitement est particulièrement intéressant pour prétraiter les charges destinées à un hydrocraqueur employant un ou des catalyseurs zéolithiques, les charges destinées au craqueur catalytique fluide, et effectuer l'hydroraffinage de coupes huiles.

Dans ce mode d'hydrotraitement encore parfois appelé prétraitement des charges d'hydrocraquage, prétraitement des charges de FCC ou hydroraffinage d'huiles, le catalyseur selon l'invention est employé à une température en général supérieure ou égale à 300°C, généralement d'au plus 450°C, et souvent comprise entre 340°C et 440°C. La pression est en général supérieure à 2MPa et de préférence supérieure à 5 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 5h$^{-1}$ et de préférence 0,2-4h$^{-1}$. Dans ces conditions, les catalyseurs de la présente invention contenant du nickel, du molybdène, du bore et du silicium présentent une meilleure activité en hydrodésulfuration et en hydrodéazotation que les catalyseurs contenant du molybdène et du nickel mais ne contenant pas les deux élements bore et silicium comme le montre l'exemple 9.

Hydrocraquage partiel

Le catalyseur de la présente invention peut être employé avantageusement pour l'hydrocraquage partiel de diverses coupes hydrocarbonées, par exemple de coupes de type distillats sous vide fortement chargée en soufre et azote. Les charges hydrocarbonées traitées ont des points d'ébullition initiaux d'au moins 150°C, de préférence au moins 300°C, et plus avantageusement c'est une coupe bouillant entre 330 et 650°C.

Dans ce mode d'hydrocraquage partiel encore parfois appellé hydrocraquage doux, le niveau de conversion est inférieur à 55%. Le catalyseur selon l'invention est alors employé à une température en général supérieure ou égale à 350°C, généralement d'au plus 480°C, et souvent comprise entre 360°C et 460°C , de préférence 360-450°C. La pression est en général supérieure à 2Mpa et de préférence supérieur à 5 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 5h$^{-1}$ et de préférence 0,1-4h$^{-1}$. Dans ces conditions, les catalyseurs de la présente invention contenant du bore et du silicium présentent une meilleure activité en conversion, en hydrodésulfuration et en hydrodéazotation que les catalyseurs ne contenant pas les deux éléments bore et silicium comme indiqué dans l'exemple 17.

Hydrocraquage

Le catalyseur de la présente invention peut être aussi avantageusement employé pour l'hydrocraquage de diverses coupes hydrocarbonées, par exemple de coupes de type distillats sous vide fortement chargée en soufre et azote. Les charges hydrocarbonées traitées ont des points d'ébullition initiaux d'au moins 150°C, de préférence au moins 300°C, et plus avantageusement c'est une coupe bouillant entre 330 et 650°C.

Dans ce mode d'hydrocraquage le niveau de conversion est supérieur à 55%. Les conditions opératoires sont généralement une température de 350-460°C, de préférence 360-450°C, une pression supérieure à 5 MPa, et de préférence supérieure à 8 MPa, une vitesse volumique horaire de 0,1 à 5 h $^{-1}$ et de préférence 0,1-4h$^{-1}$ et avec une quantité d'hydrogène d'au moins 100Nl/l de charge, et de préférence 200-3000Nl/l de charge.

Dans ces conditions, les catalyseurs de la présente invention contenant du molybdène, du nickel, du bore et du silicium présentent une meilleure activité en conversion et une sélectivité en distillats moyens équivalente au catalyseurs ne contenant pas les deux élements bore et silicum comme le montre l'exemple 18.

Les exemples suivants illustrent la présente invention sans toutefois en limiter la portée.

Exemple 1

Préparation du support alumine rentrant dans la composition des catalyseurs de l'invention.

Nous avons fabriqué un support à base d'alumine en grande quantité de façon à pouvoir préparer les catalyseurs décrits ci après à partir du même support mis en forme. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 243 m$^2$/g, un volume poreux de 0,61 cm$^3$/g et une distribution en taille de pore monomodale centrée sur 10 nm. L'analyse de la matrice par la diffraction des rayons X révèle que celle ci est composée uniquement d'alumine gamma cubique de faible cristallinité.

Exemple 2

Préparation du catalyseur précurseur NiMo/alumine.

Nous avons imprégné à sec le support extrudé de l'exemple 1 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 550°C pendant 2 heures sous air sec. La teneur finale en trioxyde de molybdène est de 14,5% poids ce qui correspond à 0,1 mole de l'élément molybdène pour 100 g de catalyseur fini. La teneur finale en oxyde de nickel NiO est de 2,8% poids ce qui correspond à 0,037 mole de l'élément nickel pour 100 g de catalyseur fini. Le catalyseur A ainsi obtenu, dont les caractéristiques sont regroupées dans le tableau 1, est représentatif des catalyseurs industriels.

Exemple 3

Préparation du catalyseur précurseur NiMoP/alumine.

Nous avons imprégné à sec le support extrudé de l'exemple 1 par une solution aqueuse contenant les mêmes sels que la solution ayant servie à préparer le catalyseur A de l'exemple 2 mais auquel on a ajouté de l'acide phos-

phorique $H_3PO_4$. Les mêmes étapes de maturation, séchage et calcination que pour la préparation du catalyseur A de l'exemple 2 ont été utilisées. La teneur finale en trioxyde de molybdène est de 14,5% poids ce qui correspond à 0,1 mole de l'élément molybdène pour 100 g de catalyseur fini. La teneur finale en oxyde de nickel est de 2,80% poids ce qui correspond à 0,037 mole de l'élément nickel pour 100 g de catalyseur fini. La teneur finale en phosphore est de 6 % poids exprimée en pentaoxyde ce qui correspond à un rapport atomique P/Mo de 0,85. Le catalyseur B ainsi obtenu, dont les caractéristiques sont résumées dans le tableau 1, est représentatif de catalyseurs industriels.

Tableau 1 :

| Caractéristiques des catalyseurs NiMo A à H | | | | | | | | |
|---|---|---|---|---|---|---|---|---|
| Catalyseur | A | B | C | D | E | F | G | H |
| $MoO_3$ (% pds) | 14,5 | 14,5 | 14 | 14 | 13,5 | 14 | 14 | 13,5 |
| NiO (% pds) | 2,8 | 2,8 | 2,7 | 2,7 | 2,6 | 2,7 | 2,7 | 2,6 |
| $P_2O_5$ (% pds) | 0 | 6 | 0 | 0 | 0 | 5,8 | 5,8 | 5,6 |
| $B_2O_3$ (% pds) | 0 | 0 | 3,2 | 0 | 3,2 | 3,2 | 0 | 3,2 |
| $SiO_2$ (% pds) | 0 | 0 | 0 | 3,9 | 3,9 | 0 | 3,9 | 3,9 |
| $Al_2O_3$ (% pds) | 82,7 | 76,7 | 80,1 | 79,4 | 76,8 | 74,3 | 73,6 | 71,2 |
| B/Mo (at/at) | / | / | 0,94 | / | 0,98 | 0,94 | / | 0,98 |
| Si/Mo (at/at) | / | / | / | 0,66 | 0,69 | / | 0,66 | 0,69 |
| P/Mo (atlat) | / | 0,85 | / | / | / | 0,85 | 0,85 | 0,85 |
| Ni/Mo (at/at) | 0,37 | 0,37 | 0,37 | 0,37 | 0,37 | 0,37 | 0,37 | 0,37 |

Exemple 4

Préparation des catalyseurs NiMo/alumine + B+Si

Trois catalyseurs, nommés C, D et E ont été préparés par imprégnation à sec d'extrudés du catalyseur NiMo/ alumine décrits dans l'exemple 2 (catalyseur A), par des solutions contenant respectivement du biborate d'ammonium, l'émulsion de silicone Rhodorsil EP1 et un mélange des deux composés précédants. Après maturation à température ambiante dans une atmosphère saturée en eau, les extrudés imprégnés sont séchés pendant une nuit à 120°C puis calcinés à 550°C pendant 2 heures sous air sec. Les caractéristiques de ces trois catalyseurs sont regroupées dans le tableau 1. Le catalyseur E est conforme à l'invention.

Exemple 5

Préparation des catalyseurs NiMoP/alumine + B+Si

Trois échantillons de catalyseur NiMoP/alumine (catalyseur B) décrits dans l'exemple 3 ont été imprégnés par les mêmes solutions contenant soit B, soit Si soit B+Si, et selon le même protocole que le catalyseur NiMo/alumine dans l'exemple 4. On prépare ainsi un catalyseur nommé F de formule NiMoPB/alumine, un catalyseur G de formule NiMoPSi/alumine et un catalyseur H de formule NiMoPBSi/alumine dont les proportions entre les divers éléments Ni, Mo, P, B ou Si et les caractéristiques sont résumées dans le tableau 1. Le catalyseur H est conforme à l'invention.

Exemple 6

Préparation des catalyseurs NiMoP/alumine +F+B+Si (conforme à l'invention)

Du fluorure d'ammonium a été rajouté à une solution aqueuse contenant du biborate d'ammonium et l'émulsion de silicone Rhodorsil EP1 de façon à obtenir par imprégnation à sec d'extrudés de catalyseur A, NiMo/alumine, décrits dans l'exemple 2, un catalyseur I de formule NiMoFBSi/alumine contenant 1% poids de fluor et des proportions de Ni, Mo, B et Si indiquées dans le tableau 1. Les mêmes étapes de maturation, séchage et calcination que pour la préparation du catalyseur A de l'exemple 2 ont été utilisées.
De la même façon et avec la même solution, un volume d'extrudés de catalyseur B, NiMoP/alumine, décris dans l'exemple 3 a été imprégné. Le catalyseur J ainsi obtenu, de formulation NiMoPFBSi/alumine, contient 1% poids de fluor . Les caractéristiques des deux catalyseurs I et J sont regroupées dans le tableau 2.

Tableau 2 :

| Caractéristiques des catalyseurs NiMo I à S | | | | | | | | | |
|---|---|---|---|---|---|---|---|---|---|
| Catalyseur | I | J | K | L | M | P | Q | R | S |
| $MoO_3$(% pds) | 13,4 | 13,4 | 14 | 14 | 13,5 | 14,2 | 13,8 | 13,4 | 13,1 |
| NiO(% pds) | 2,6 | 2,6 | 2,7 | 2,7 | 2,6 | 2,8 | 2,75 | 2,7 | 2,6 |
| $P_2O_5$(% pds) | 0 | 5,5 | 0 | 0 | 0 | 0 | 0 | 5,9 | 5,7 |
| $B_2O_3$(% pds) | 3,2 | 3,2 | 3,2 | 0 | 3,2 | 0 | 3,2 | 0 | 3,1 |
| $SiO_2$(% pds) | 3,9 | 3,9 | 0 | 3,9 | 3,9 | 4,3 | 4,2 | 4,1 | 4,0 |
| F (% pds) | 1 | 1 | 0 | 0 | 0 | 0 | 0 | 0 | 0 |
| $Al_2O_3$ (% pds) | 75,9 | 70,4 | 80,1 | 79,4 | 76,8 | 78,6 | 76,1 | 73,9 | 71,6 |
| B/Mo (at/at) | 0,98 | 0,98 | 0,94 | 0 | 0,98 | 0 | 0,95 | 0 | 0,98 |
| Si/Mo (at/at) | 0,69 | 0,69 | 0 | 0,66 | 0,69 | 0,73 | 0,73 | 0,73 | 0,73 |
| P/Mo (at/at) | 0 | 0,85 | 0 | 0 | 0 | 0 | 0 | 0,89 | 0,88 |
| F/Mo (at/at) | 0,57 | 0,57 | 0 | 0 | 0 | 0 | 0 | 0 | 0 |
| Ni/Mo (at/at) | 0,37 | 0,37 | 0,37 | 0,37 | 0,37 | 0,38 | 0,38 | 0,38 | 0,38 |

### Exemple 7

#### Préparation des catalyseurs NiMo/alumine B (non conformes à l'invention)

Nous avons imprégné à sec trois échantillons de support décris dans l'exemple 1 par une solution aqueuse renfermant du biborate d'ammonium. Après maturation à température ambiante dans une atmosphère saturée en eau les extrudés imprégnés sont séchés pendant une nuit à 120°C puis calcinés à 550°C pendant 2 heures sous air sec. Les extrudés d'alumine dopés au bore ainsi obtenus ont ensuite été imprégnés par une solution renfermant de l'heptamolybdate d'ammonium $Mo_7O_{24}(NH_4)_6.4H_2O$ et des nitrate de nickel $Ni(NO_3)_2.6H_2O$. Après maturation, séchage et calcination à 550°C comme précédemment, on obtient un catalyseur nommé K : NiMo/alumine dopée au bore. Les teneurs finales en Mo, Ni et B correspondent à celle du catalyseur C décris dans l'exemple 4.

Un catalyseur L a été obtenu par la même procédure que le catalyseur K ci-dessus mais en remplaçant dans la solution d'imprégnation le précurseur de bore par l'émulsion de silicone Rhodorsil EP1. Le catalyseur ainsi obtenu : NiMo/alumine dopé au silicium a la même composition massique que le catalyseur D décris dans l'exemple.

Enfin, un catalyseur M a été obtenu par la même procédure que le catalyseur ci-dessus K mais en utilisant une solution aqueuse renfermant le biborate d'ammonium et l'émulsion de silicone Rhodorsil EP1. Les teneurs finales en Mo, Ni, B et Si du catalyseur M sont les mêmes que celles du catalyseur E décris dans l'exemple 4. Les caractéristiques des catalyseurs K, L et M sont résumées dans le tableau 2.

### Exemple 8

#### Préparation du support silice-alumine.

Nous avons fabriqué un support de type silice alumine par coprécitation. Après coprécipitation le solide est filtré, séché 4 heures à 120°C sous air sec. On obtient ainsi un gel que l'on a mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 223 $m^2$/g, un volume poreux de 0,51 $cm^3$/g et une distribution en taille de pore monomodale centrée sur 9 nm. La composition de ces extrudés est de 5,2 % poids de SiO2 et 94,8 % en poids de Al2O3.

Exemple 9

Préparation de catalyseurs supportés sur silice-alumine. (non conformes à l'invention)

Nous avons imprégné à sec le support extrudé de l'exemple 8 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 550°C pendant 2 heures sous air sec. Le catalyseur P ainsi obtenu, dont les caractéristiques sont regroupées dans le tableau 2, est représentatif des catalyseurs industriels.

De la même manière, nous avons imprégné à sec le support extrudé de l'exemple 8 par une solution aqueuse renfermant des sels de molybdène, de nickel et de phosphore. Le sel de molybdène est l'heptamolybdate d'ammonium $Mo_7O_{24}(NH_4)_6.4H_2O$, celui de nickel est le nitrate de nickel $Ni(NO_3)_2.6H_2O$ et le phosphore est ajouté sous la forme d'acide phosphorique. Après maturation à température ambiante dans une atmosphère saturée en eau, les extrudés imprégnés sont séchés pendant une nuit à 120°C puis calcinés à 550°C pendant 2 heures sous air sec. Le catalyseur R ainsi obtenu, dont les caractéristiques sont regroupées dans le tableau 2, est représentatif des catalyseurs industriels.

Exemple 10

Préparation des catalyseurs NiMo/silice-alumine contenant du bore. (non conformes à l'invention)

Nous avons imprégné à sec le catalyseur P obtenu dans l'exemple 9 par une solution aqueuse contenant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient ainsi le catalyseur Q dont les caractéristiques sont regroupées dans le tableau 2.

Nous avons imprégné à sec le catalyseur R obtenu dans l'exemple 9 par une solution aqueuse contenant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient ainsi le catalyseur S dont les caractéristiques sont regroupées dans le tableau 2.

Exemple 11 : Tests d'hydrogénation et d'acidité sur molécules modèles : Hydrogénation du toluène, isomérisation du cyclohexane

Les catalyseurs A à S, précédemment décrits, sont sulfurés in situ en dynamique dans le réacteur tubulaire à lit fixe traversé d'une unité pilote de type Catatest (constructeur Géomécanique), les fluides circulant de haut en bas. Les mesures d'activité hydrogénante et isomérisante sont effectuées immédiatement après la sulfuration sous pression sans remise à l'air avec la charge d'hydrocarbures qui a servie à sulfurer les catalyseurs.

La charge de sulfuration et de test est composée de 5,8% de diméthyldisulfure (DMDS), 20% de toluène et 74,2% de cyclohexane en poids. On mesure ainsi les activités catalytiques stabilisées de volumes égaux de catalyseurs A à S dans la réaction d'hydrogénation du toluène. Le suivi de l'isomérisation du cyclohexane, diluant du toluène, permet d'évaluer l'acidité des catalyseurs.

Les conditions de mesure d'activité sont les suivantes :

Pression totale : 6,0 MPa
Pression de toluène : 0,38 MPa
Pression de cyclohexane : 1,55 MPa
Pression d'hydrogène : 3,64 MPa
Pression d'$H_2S$ : 0,22 MPa
Volume de catalyseur : 40 cc
Débit de charge : 80 cc/h
Vitesse spatiale horaire : 2 l/l/$h^{-1}$
Débit d'hydrogène : 36 l/h
Température de sulfuration et de test : 350°C (3°C/min)

Des prélèvements de l'effluent liquide sont analysés par chromatographie en phase gazeuse. La détermination des concentration molaire en toluène non converti (T) et des concentrations ses produits d'hydrogénation : le méthylcyclohexane (MCC6), l'éthylcyclopentane (EtCC5) et les diméthylcyclopentane (DMCC5) permettent de calculer un taux d'hydrogénation de toluène $X_{HYD}$ défini par :

$$X_{HYD} (\%) = 100 * \frac{(MCCC6 + EtCC5 + DMCC5)}{(T + MCC6 + EtCC5 + DMCC5)}$$

Le taux d'isomérisation du cyclohexane $X_{ISO}$ est calculé de la même façon à partir des concentrations en cyclohexane non converti et de son produit de réaction, le méthylcyclopentane.

La réaction d'hydrogénation du toluène et d'isomérisation du cyclohexane étant d'ordre 1 dans nos conditions de test et le réacteur se comportant comme un réacteur piston idéal, on calcul l'activité hydrogénante $A_{HYD}$ et isomérisante $A_{ISO}$ des catalyseurs en appliquant la formule :

$$Ai = \ln(100/(100-X_i))$$

Le tableau 3 compare les activités hydrogénante et isomérisante relatives, égales au rapport de l'activité du catalyseur considéré sur l'activité du catalyseur A pris comme référence.

TABLEAU 3 :

| Activités relatives en hydrogénation et en isomérisation des catalyseurs NiMo A à S | | | |
|---|---|---|---|
| Catalyseur | Formule | $A_{HYD}$ relative à A | $A_{ISO}$ relative à A |
| A | NiMo/alumine | 1 | 1 |
| B | NiMoP/alumine | 1,52 | 1,7 |
| C | NiMoB/alumine | 1,48 | 4,0 |
| D | NiMoSi/alumine | 1,22 | 11,3 |
| E | NiMoBSi/alumine | 1,71 | 17,7 |
| F | NiMoPB/alumine | 1,82 | 9,5 |
| G | NiMoPSi/alumine | 1,36 | 14,6 |
| H | NiMoPBSi/alumine | 2,05 | 24,7 |
| I | NiMoFBSi/alumine | 2,13 | 20,9 |
| J | NiMoPFBSi/alumine | 1,91 | 21,8 |
| K | NiMo/alumine-B | 0,95 | 1,9 |
| L | NiMo/alumine-Si | 0,5 | 10,2 |
| M | NiMo/alumine-BSi | 0,6 | 12,3 |
| P | NiMo/silice-alumine | 0,8 | 7,4 |
| Q | NiMoB/silice-alumine | 0,95 | 14,2 |
| R | NiMoP/silica-alumine | 1,2 | 9,8 |
| S | NiMoPB/silice-alumine | 1,4 | 14,6 |

Le tableau 3 met en évidence les progrès apportés par les catalyseurs E, H, I et J pour lesquels à la fois du bore et du silicium ont été ajoutés au catalyseur. Cette association B et Si permet d'obtenir un renforcement à la fois de la fonction hydrogénante et de l'acidité du catalyseur. L'ajout de bore (catalyseurs C et F) ou de silicium (catalyseurs D et G) seul ne permet pas d'obtenir un gain à la fois sur la fonction hydrogénante et acide du catalyseur. Les catalyseurs K, L et M pour lesquels le B, le Si et le B+Si ont été respectivement introduit avec l'alumine avant le dépôt de la phase active NiMo sont moins actif en hydrogénation que leurs homologues C, D et E. De même, l'acidité des catalyseurs K, L et M indiquée par leur activité isomérisante est améliorée par rapport au catalyseur A mais reste inférieure à l'activité isomérisante de leurs homologues, les catalyseurs C, D, E. Le tableau 3 montre donc que l'incorporation du silicium, du bore ou du silicium et du bore doit se faire après le dépôt de la phase active (catalyseurs C, D, E) et non avant (catalyseurs K, L, M) pour obtenir un renforcement simultanément de l'activité hydrogénante et de l'activité isomérisante, c'est-à-dire de l'acidité.

Le tableau 3 montre également l'intérêt d'introduire le silicium sur un catalyseur déjà fabriqué et l'avantage qu'il y a à utiliser cette méthode de préparation plutôt que de partir d'un support à base de silice-alumine. Ainsi les catalyseurs de l'exemple 9 à base de silice-alumine contenant du bore tel que le catalyseur Q ont une composition très proche de la composition du catalyseur E mais une activité hydrogénante notablement inférieure. Le niveau d'activité isomérisante du catalyseur Q est élevé mais également un peu inférieur au catalyseur H. Le même résultat est constaté pour les catalyseurs S et H contenant également du phosphore. Ceci est du à la formation d'une phase active moins bonne sur un support silice-alumine que sur alumine, ce qui est bien connu de l'homme du métier. L'ajout de bore a donc un effet bien moindre sur le catalyseur contenant un support silice-alumine que l'ajout conjoint de bore et de silicium sur un catalyseur ayant un support alumine.

Exemple 12

Test en hydrotraitement d'un distillat sous vide

Les catalyseurs A, B, F, H et S précédemment décrits ont également été comparés en test d'hydrotraitement d'un distillat sous vide dont les principales caractéristiques sont données dans le tableau suivant :

| Densité à 15°C | 0,938 |
|---|---|
| Soufre | 3,12%poids |
| Azote total | 1050 ppm poids |
| Distillation Simulée | |
| PI | 345 °C |
| 10% | 412 °C |
| 50% | 488 °C |
| 90% | 564 °C |
| PF | 615 °C |

Le test est mené dans un réacteur pilote isotherme à lit fixe traversé, les fluides circulant de bas en haut. Après sulfuration in situ à 350°C dans l'unité sous pression au moyen d'un gazole de distillation directe auquel est additionné 2% poids de diméthyldisulfure, le test d'hydrotraitement a été conduit dans les conditions opératoires suivantes :

| Pression totale | 12 MPa |
|---|---|
| Volume de catalyseur | 40 cm$^3$ |
| Température | 380°C |
| Débit d'hydrogène | 24 l/h |
| Débit de charge | 20 cm$^3$/h |

Les performances catalytiques des catalyseurs testés sont données dans le tableau 4 suivant. Elles sont exprimées en activité relative, en posant que celle du catalyseur A est égale à 1 et en considérant qu'elles sont d'ordre 1,5. La relation liant l'activité et la conversion en hydrodésulfuration (%HDS) est la suivante :

$$A_{HDS} = \left[\frac{100}{(100-\%HDS)}\right]^{0,5} - 1$$

La même relation est applicable pour l'hydrodéazotation (% HDN et $A_{HDN}$).

Par ailleurs, on évalue également la conversion nette de la fraction de la charge ayant un point d'ébullition supérieur à 380°C (% 380°C$^+$ en poids) obtenue avec chaque catalyseur. Elle est exprimée à partir des résultats de distillation simulée (méthode ASTM D86) par la relation :

$$Conv\ 380°C^+ = \frac{(\%380°C+)recette-(\%380°C+)charge}{(\%380°C+)charge}$$

TABLEAU 8

| Activité des catalyseurs NiMo en hydrotraitement de distillat sous vide | | | |
|---|---|---|---|
| Catalyseur | $A_{HDS}$ relative au catalyseur A | AHDN relative au catalyseur A | Conv 380°C+ (%) |
| A (NiMo/alumine) | 1 | 1 | 30 |
| B (NiMoP/alumine) | 1,1 | 1,3 | 33 |
| F (NiMoPB/alumine) | 1,15 | 1,5 | 37 |
| H (NiMoPBSi/alumine) | 1,2 | 1,6 | 40 |
| S (NiMoPB/silice-alumine) | 1,1 | 1,5 | 39 |

Les résultats du tableau 8 indiquent que l'ajout de bore et de silicium à un précurseur du catalyseur (H) contenant un élément du groupe VIB et au moins un élement non noble du groupe VIII supportés sur une matrice oxyde amorphe obtenu selon les méthodes de l'invention améliorent notablement les performances du catalyseur en hydrodésulfuration, en hydrodéazotation et en conversion de la fraction 380°C+ en coupe légère bouillant à une température inférieure à 380°C. On note également qu'un catalyseur S, de composition très semblable au catalyseur H, obtenu par ajout de B à un catalyseur R contenant une phase NiMo sur une silice-alumine et contenant du P est moins bonne en HDS, en HDN et en conversion que le catalyseur H. Ceci est du à la moins bonne dispersion de la phase active NiMo sur un support silice-alumine que sur un support alumine comme il est bien connu de l'homme de métier.

Le catalyseur H contenant du bore et du silicium est donc particulièrement intéressant pour une utilisation dans des procédés d'hydrotraitement visant à prétraiter les charges d'hydrocraquage de type distillats sous vide car l'activité améliorée en hydrodéazotation permet d'obtenir une charge d'hydrocraquage ayant une plus faible teneur en azote.

Le catalyseur H contenant du bore et du silicium est également particulièrement intéressant pour une utilisation dans des procédés d'hydrotraitement visant à prétraiter les charges de craquage catalytique de type distillats sous vide car l'activité améliorée en hydrodésulfuration, en hydrodéazotation et en conversion permet d'obtenir une charge de craqueur catalytique plus réactive.

Le catalyseur H contenant du bore et du silicium est également particulièrement intéressant pour une utilisation dans des procédés d'hydroraffinage car l'activité améliorée en hydrodésulfuration, en hydrodéazotation et en conversion permet d'obtenir des huiles techniques ou médicinales aux spécifications.

Exemple 13

Préparation du catalyseur précurseur CoMo/alumine.

Nous avons imprégné à sec le support extrudé de l'exemple 1 par une solution aqueuse renfermant des sels de molybdène et de cobalt. Le sel de molybdène est l'heptamolybdate d'ammonium $Mo_7O_{24}(NH_4)_6.4H_2O$ et celui de cobalt est le nitrate de cobalt $Co(NO_3)_2.6H_2O$. Après maturation à température ambiante dans une atmosphère saturée en eau, les extrudés imprégnés sont séchés pendant une nuit à 120°C puis calcinés à 550°C pendant 2 heures sous air sec. Le catalyseur ACo ainsi obtenu, dont les caractéristiques sont regroupées dans le tableau 9, est représentatif des catalyseurs industriels.

Exemple 14

Préparation du catalyseur précurseur CoMoP/alumine.

Nous avons imprégnée à sec le support extrudé de l'exemple 1 par une solution aqueuse contenant les mêmes sels que la solution ayant servie à préparer le catalyseur ACo de l'exemple 13 mais auquel on a ajouté de l'acide phosphorique $H_3PO_4$. Les mêmes étapes de maturation, séchage et calcination que pour la préparation du catalyseur ACo de l'exemple 13 ont été utilisées. Le catalyseur BCo ainsi obtenu, dont les caractéristiques sont résumées dans le tableau 9, est représentatif de catalyseurs industriels.

Tableau 9 :

| Caractéristiques des catalyseurs CoMo | | | | |
|---|---|---|---|---|
| Catalyseur | ACo | BCo | ECo | HCo |
| MoO$_3$(% pds) | 14,4 | 13.6 | 12.2 | 9.7 |
| CoO (% pds) | 3,2 | 3,02 | 2.7 | 2.15 |
| P$_2$O$_5$ (% pds) | 0 | 6 | 0 | 5,56 |
| B$_2$O$_3$ (% pds) | 0 | 0 | 1,25 | 1,12 |
| SiO$_2$ (% pds) | 0 | 0 | 2,52 | 2,57 |
| Al$_2$O$_3$ (% pds) | 82,4 | 77,4 | 81.3 | 78.9 |
| B/Mo (at/at> | / | / | 0,42 | 0,48 |
| Si/Mo (at/at) | / | / | 0,50 | 0,64 |
| P/Mo (at/at) | / | 0,90 | / | 1.17 |
| Co/Mo (at/at) | 0,43 | 0,43 | 0,43 | 0,43 |

Exemple 15

Préparation d'un catalyseur CoMo/alumine + B+Si (conforme à l'invention)

Un catalyseur, nommé ECo a été préparé par imprégnation à sec d'extrudés du catalyseur CoMo/alumine décris dans l'exemple 13 (catalyseur ACo), par une solution contenant un mélange de biborate d'ammonium et d'émulsion de silicone Rhodorsil EP1. Après maturation à température ambiante dans une atmosphère saturée en eau, les extrudés imprégnés sont séchés pendant une nuit à 120°C puis calcinés à 550°C pendant 2 heures sous air sec. Les caractéristiques de ce catalyseur sont regroupées dans le tableau 9.

Exemple 16

Préparation d'un catalyseur CoMoP/alumine + B+Si (conforme à l'invention)

Un échantillon de catalyseur CoMoP/alumine (catalyseur BCo) décris dans l'exemple 14 a été imprégné par la même solutions contenant B+Si, et selon le même protocole que le catalyseur CoMo/alumine dans l'exemple 15. On prépare ainsi un catalyseur nommé HCo de formule CoMoPBSi/alumine dont les proportions entre les divers éléments Co, Mo, P, B ou Si et les caractéristiques sont résumées dans le tableau 9.

Exemple 17

Préparation d'un catalyseur CoMoP/alumine +F+B+Si (conforme à l'invention)

Du fluorure d'ammonium a été rajouté à une solution aqueuse contenant du biborate d'ammonium et l'émulsion de silicone Rhodorsil EP1 de façon à obtenir par imprégnation à sec d'extrudés du catalyseur ACo, CoMo/alumine, décris dans l'exemple 13, un catalyseur ICo de formule CoMoFBSi/alumine dont les proportions de Co, Mo, B et Si indiquées dans le tableau 10. Les mêmes étapes de maturation, séchage et calcination que pour la préparation du catalyseur de l'exemple 15 ont été utilisées.

De la même façon et avec la même solution, un volume d'extrudés de catalyseur BCo, CoMoP/alumine, décris dans l'exemple 14 a été imprégné. Le catalyseur JCo ainsi obtenu a une formulation CoMoPFBSi/alumine. Les caractéristiques des deux catalyseurs ICo et JCo sont regroupées dans le tableau 10.

Tableau 10 :

| Caractéristiques des catalyseurs CoMo ICo et JCo | | |
|---|---|---|
| Catalyseur | ICo | JCo |
| MoO$_3$ (% pds) | 9.22 | 8.35 |

Tableau 10 :   (suite)

| Caractéristiques des catalyseurs CoMo ICo et JCo | | |
|---|---|---|
| Catalyseur | ICo | JCo |
| CoO (% pds) | 2,05 | 1.85 |
| $P_2O_5$ (% pds) | 0 | 5,5 |
| $B_2O_3$ (% pds) | 1,23 | 1,14 |
| $SiO_2$ (% pds) | 2,72 | 2,67 |
| F (% pds) | 1.05 | 1.12 |
| $Al_2O_3$ (% pds) | 83.7 | 71.3 |
| B/Mo (at/at) | 0,55 | 0,57 |
| Si/Mo (at/at) | 0,71 | 0,77 |
| P/Mo (at/at) | / | 1.24 |
| F/Mo (at/at) | 0,55 | 0,57 |
| Co/Mo (at/at) | 0,43 | 0,43 |

Exemple 18

Tests d'hydrodésulfuration de gazole

Les catalyseurs supportés précédemment décrits dans les exemples 13 à 17 ont été comparés en test d'hydrodésulfuration de gazole dans une unité pilote en lit fixe traversé fonctionnant en mode "upflow" c'est à dire que la charge circule de bas en haut. Les caractéristiques principales de la charge sont données dans le tableau suivant :

| | |
|---|---|
| Densité à 15°C | 0,856 |
| Indice de Réfraction à 20°C | 1,4564 |
| Viscosité à 50°C | 3,72 cSt |
| Soufre | 1,57%poids |
| Distillation Simulée | |
| PI | 153°C |
| 5% | 222°C |
| 50% | 315°C |
| 95% | 415°C |
| PF | 448°C |

Le test d'HDS de gazole est mené dans les conditions opératoires suivantes :

| | |
|---|---|
| Pression totale | 3 MPa |
| Volume de catalyseur | 40 cm$^3$ |
| Température | 340°C |
| Débit d'hydrogène | 20 l/h |
| Débit de charge | 80 cm$^3$/h |

Chacun des catalyseurs est sulfuré avant le test à 350°C, et une pression totale de 3MPa par le gazole décrit ci-dessus auquel on a ajouté 2% en poids de Diméthyl-disulfure (DMDS).
Les performances catalytiques des catalyseurs testés sont données dans le tableau 11 suivant. L'activité est calculée en considérant que la réaction est d'ordre 1,5. La relation liant l'activité et la conversion (%HDS) est alors la suivante :

$$A_{HDS} = [\frac{100}{(100-\%HDS)}]^{0,5} -1$$

avec :

$$\%HDS = 100[\frac{Scharge-Seffluent}{Seffluent}]$$

Dans le tableau 11 les activités sont exprimées en activité relative, en posant que celle du catalyseur ACo est égale à 1.

TABLEAU 11

| Activité des catalyseurs en hydrodésulfuration de gazole | | |
|---|---|---|
| Catalyseur | | Activité relative à ACo |
| ACo | CoMo | 1 |
| BCo | CoMoP | 1.15 |
| ECo | CoMoBSi | 1.5 |
| HCo | CoMoPBSi | 1.22 |
| ICo | CoMoBSiF | 1.95 |
| JCo | CoMoPBSiF | 1.48 |

Dans le tableau 11, on observe que la performance en hydrodésulfuration de gazole des catalyseurs contenant à la fois le bore et le silicium est dans chaque cas supérieure à la performance des catalyseur ne contenant pas ces deux élements. Il y a donc un avantage à associer le Bore et le silicium. Cet avantage est notable quand le catalyseur contient du P (HCo et JCo) mais il est encore plus important quant le catalyseur ne contient pas de P (ECo et ICo). Dans tous les cas la présence de fluor augmente encore plus l'activité en hydrodésulfuration, et ici également, les résultats sont meilleurs en absence de phosphore.

Les résultats du tableau 11 indiquent donc que l'ajout de bore et de silicium à un précurseur d'un catalyseur contenant au moins un élément du groupe VIB et au moins un élément non noble du groupe VIII supportés sur une matrice oxyde amorphe obtenu selon les méthodes de l'invention améliorent notablement les performances du catalyseur en hydrodésulfuration de coupes gazoles.

Exemple 19

Tests d'hydrogénation d'aromatique dans les gazoles

Les catalyseurs supportés A, B, F et H de type NiMo précédemment décrits dans les exemples 2, 3 et 5 ont été comparés en test d'hydrogénation d'aromatiques dans un gazole. La charge de test est un gazole de craqueur catalytique fluide ou LCO préalablement désulfuré de manière à ne contenir qu'une faible teneur en soufre. Les principales caractéristiques de ce gazole désulfuré sont données dans le tableau suivant :

| | |
|---|---|
| Densité à 20°C | 0,904 |
| Soufre (ppm) | 109 |
| Azote (ppm) | 132 |
| D86 (°C) | |
| PI | 166 |
| 10% | 210 |
| 50% | 266 |
| 90% | 343 |
| PF | 415 |
| Aromatiques (%pds) | |
| Total | 74 |
| Mono | 44 |

(suite)

| | |
|---|---|
| Di | 27 |
| Tri | 3 |
| CA par RMN | 43 |

On notera dans ce tableau que le gazole désulfuré ne contient que 109 ppm de soufre, une teneur en azote importante à 132 ppm et une teneur en aromatique très importante.

Le test d'hydrogénation d'aromatique est mené dans une unité pilote en lit fise traversé fonctionnant en mode "upflow" c'est à dire que la charge circule de bas en haut dans les conditions opératoires suivantes :

| | |
|---|---|
| Pression totale | 9 MPa |
| Volume de catalyseur | 40 cm$^3$ |
| Température | 340°C |
| Débit d'hydrogène | 40 l/h |
| Débit de charge | 40 cm$^3$/h |

Chacun des catalyseurs est sulfuré avant le test à 350°C, et à une pression totale de 9MPa par le gazole décrit ci-dessus auquel on a ajouté 2% en poids de diméthyl-disulfure (DMDS).

Les performances catalytiques des catalyseurs testés sont données dans le tableau 12 suivant.

Pour chaque expérience, nous avons mesuré la densité de l'effluent liquide à 20°C, la teneur en CA (Carbone Aromatique mesuré par RMN) de l'effluent et la teneur initiale $CA_0$ de la charge. A partir du CA de la charge et du CA de l'effluent, nous avons calculé la conversion des aromatiques (% HAR) puis l'activité hydrogénante en admettant qu'elle est d'un ordre 1.

$$A_{HAR} = Ln(\frac{100}{(100- \% \, HAR)})$$

Nous avons également déterminé l'activité en hydrodésulfuration. L'activité est calculée en considérant que la réaction est d'ordre 1,5. La relation liant l'activité et la conversion (%HDS) est alors la suivante :

$$A_{HDS} = [\frac{100}{(100- \% \, HDS)}]^{0,5} - 1$$

Nous avons également déterminé l'activité en hydrodéazotation. L'activité est calculée en considérant que la réaction est d'ordre 1. La relation liant l'activité et la conversion en produit azoté (%HDN) est alors la suivante :

$$A_{HDN} = Ln(\frac{100}{(100- \% \, HDN)})$$

Dans le tableau 12, les activités sont exprimées en activité relative, en posant que celle du catalyseur A est égale à 1.

TABLEAU 12

| Activité des catalyseurs en hydrogénation d'aromatique dans un gazole désulfuré | | | |
|---|---|---|---|
| Catalyseur | $A_{HDS}$ relative au catalyseur A | $A_{HDN}$ relative au catalyseur A | A HAR relative au catalyseur A |
| A (NiMo/alumine) | 1 | 1 | 1 |
| B (NiMoP/alumine) | 1,12 | 1,22 | 1,25 |
| F (NiMoPB/alumine) | 1,08 | 1,52 | 1,57 |
| H (NiMoPBSi/alumine) | 1,05 | 1,71 | 1,68 |

Les résultats du tableau 12 indiquent que l'ajout de bore et de silicium à un catalyseur contenant un élément du groupe VIB et au moins un élément non noble du groupe VIII supportés sur une matrice oxyde amorphe obtenu selon les méthodes de l'invention améliorent notablement les performances du catalyseur en hydrogénation des aromatiques dans un gazole désulfuré de type LCO désulfuré. On observe également que les performances en désulfuration et en hydrodéazotation sont également améliorée.

Le catalyseur H contenant du bore et du silicium est donc particulièrement intéressant pour une utilisation dans des procédés d'hydrotraitement de charges de type distillats déjà désulfurées jusqu'à des teneurs en soufre inférieure à 700 ppm dans le but soit d'en diminuer la teneur en soufre, ou d'en diminuer la teneur en azote ou encore d' en réduire la teneur en aromatique.

Exemple 20

Tests d'hydrocraguage partiel d'un distillat sous vide

Les catalyseurs A, B, F et H dont les préparations sont décrites dans les exemples 2, 3 et 5 précédents sont utilisés dans les conditions de l'hydrocraquage doux sur une charge pétrolière de type distillats sous vide à forte teneur en soufre et en azote dont les principales caractéristiques sont les suivantes :

| Densité à 15°C | 0,921 |
|---|---|
| Soufre | 2,46%poids |
| Azote total | 1130 ppm poids |
| Distillation Simulée | |
| PI | 365 °C |
| 10% | 430 °C |
| 50% | 472 °C |
| 90% | 504 °C |
| PF | 539 °C |

L'unité de test catalytique comprend un réacteur en lit fixe, à circulation ascendante de la charge ("up-flow"). Le test d'hydrocraquage partiel est mené dans les conditions opératoires suivantes :

| Pression totale | 5 MPa |
|---|---|
| Volume de catalyseur | 40 cm$^3$ |
| Température | 380 à 420°C |
| Débit d'hydrogène | 10 l/h |
| Débit de charge | 20 cm$^3$/h |

Chacun des catalyseurs est sulfuré avant le test à 350°C, et à une pression totale de 5MPa par le gazole décrit dans l'exemple 15 auquel on a ajouté 2% en poids de diméthyl-disulfure (DMDS).

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{moins} \text{ de l'effluent}$$

La sélectivité brute SB en distillats moyens est prise égale à :

$$SB = 100*\text{poids de la fraction } (150°C\text{-}380°C)/\text{poids de la fraction } 380°C^{moins} \text{ de l'effluent}$$

La conversion en hydrodésulfuration HDS est prise égale à :

$$HDS = (S_{initial} - S_{effluent}) / S_{initial} * 100 = (24600 - S_{effluent}) \, 24600 * 100$$

La conversion en hydrodéazotation HDN est prise égale à :

$$HDN = (N_{initial} - N_{effluent}) / N_{initial} * 100 = (1130 - N_{effluent}) /1130 * 100$$

Dans le tableau 13 suivant, nous avons reporté la conversion brute CB à 400°C, la sélectivité brute SB, la conversion en hydrodésulfuration HDS et la conversion en hydrodéazotation HDN pour les catalyseurs testés dans ces conditions.

TABLEAU 13

| Activité des catalyseurs en hydrocraquage doux d'un distillat sous vide | | | | | |
|---|---|---|---|---|---|
| | | CB (%pds) | SB (%) | HDS (%) | HDN (%) |
| A | NiMo/alumine | 38.2 | 82.6 | 97.6 | 90.3 |
| B | NiMoP/alumine | 40.2 | 82.5 | 98.2 | 92.4 |
| F | NiMoPB/alumine | 41.3 | 82.5 | 97.9 | 93.3 |
| H | NiMoPBSi/alumine | 42.3 | 82.6 | 98.5 | 93.9 |

Les résultats du tableau 13 indiquent que l'ajout (catalyseur H) de bore et de silicium à un précurseur d'un catalyseur contenant un élément du groupe VIB et au moins un élément non noble du groupe VIII supportés sur une matrice oxyde amorphe obtenu selon les méthodes de l'invention améliorent substantiellement les performances du catalyseur en conversion de la fraction 380°C plus en fraction 380°C moins, ce qui est difficile à réaliser sur ce type de charge à forte teneur en soufre. On observe également dans le tableau 13 que la sélectivité brute reste équivalente.
Le catalyseur H contenant du bore et du silicium est donc particulièrement intéressant pour une utilisation dans des procédés d'hydrotraitement convertissant de charges de type distillats sous vide à forte teneur en soufre et en azote, généralement dénommé hydrocraquage doux ou partiel, à une pression d'hydrogène modérée.

Exemple 21

Tests d'hydrocraguage d'un distillat sous vide à haute conversion

Les catalyseurs A, B, F et H dont les préparations sont décrites dans les exemples 2, 3 et 5 précédents sont utilisés dans les conditions de l'hydrocraquage à haute conversion (60-100%) sur une charge pétrolière de type distillats sous vide à forte teneur en soufre et en azote dont les principales caractéristiques sont les suivantes :

| | |
|---|---|
| Densité à 15°C | 0,912 |
| Soufre | 2,22%poids |
| Azote total | 598 ppm poids |
| Distillation Simulée | |
| PI | 345 °C |
| 10% | 375 °C |
| 50% | 402 °C |
| 90% | 428 °C |
| PF | 467 °C |

L'unité de test catalytique comprend un réacteur en lit fixe, à circulation ascendante de la charge ("up-flow"). Le test d'hydrocraquage est mené dans les conditions opératoires suivantes :

| | |
|---|---|
| Pression totale | 20 MPa |
| Volume de catalyseur | 40 cm$^3$ |
| Température | 380 à 420°C |
| Débit d'hydrogène | 24 l/h |
| Débit de charge | 20 cm$^3$/h |

Chacun des catalyseurs est sulfuré avant le test à 350°C, et à une pression totale de 20MPa par la charge à laquelle on a ajouté 2% en poids de diméthyl-disulfure (DMDS).

Dans ces conditions, les performances catalytiques en hydrodésulfuration (HDS) et en hydrodéazotation (HDN) sont telles que les teneurs en soufre (S< 10 ppm) et en azote (N<2 ppm) dans l'effluent sont inférieure à la limite de détection des techniques d'analyse standard. Cette observation est normale compte tenu de la haute pression d'hydrogène employée. On s'intéresse alors principalement l'activité en conversion de la fraction 380°C$^{plus}$ c'est à dire à la conversion brute (CB). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{moins} \text{ de l'effluent}$$

Dans le tableau 14 suivant, nous avons reporté la conversion brute CB à 410°C pour les catalyseurs testés dans ces conditions.

TABLEAU 14

| Activité des catalyseurs en hydrocraquage haute pression d'un distillat sous vide | | |
|---|---|---|
| | | CB (%pds) |
| A | NiMo/alumine | 65.2 |
| B | NiMoP/alumine | 70.4 |
| F | NiMoPB/alumine | 75.2 |
| H | NiMoPBSi/alumine | 83.1 |

Les résultats du tableau 14 indiquent que l'ajout de bore et de silicium à un catalyseur contenant un élément du groupe VIB et au moins un élement non noble du groupe VIII supportés sur une matrice oxyde amorphe obtenu selon les méthodes de l'invention améliorent substantiellement les performances du catalyseur en conversion de la fraction 380°C plus en fraction 380°C moins, ce qui est difficile à réaliser sur ce type de charge à forte teneur en soufre.

Le catalyseur H contenant du bore et du silicium est donc particulièrement intéressant pour une utilisation dans des procédés d'hydrocraquage de charges de type distillats sous vide à forte teneur en soufre et en azote, généralement dénommé hydrocraquage à l'aide de catalyseur amorphe, à une pression d'hydrogène élevée.

Exemple 22

Tests d'hydrodésulfuration d'essence

Les catalyseurs CoMo supportés précédemment décrits dans les exemples 10 à 14 ont été comparés en test d'hydrodésulfuration d'essence de FCC dans une unité pilote en lit fise traversé fonctionnant en mode "upflow" c'est à dire que la charge circule de bas en haut. Les caractéristiques principales de la charge sont données dans le tableau suivant :

| | |
|---|---|
| Densité à 22°C | 0,735 |
| Soufre | 230 ppm |
| S mercaptans | 69 ppm |
| Olefines (GC) | 26.8 % pds |
| Diolefines (GC) | 1.15 % pds |
| Indice de brome (g/100g) | 47 |
| Distillation Simulée | |
| PI | 53°C |
| PF | 168°C |

Le test d'HDS d'essence est mené dans les conditions opératoires suivantes :

| Pression totale | 6 MPa |
|---|---|
| Volume de catalyseur | 25 cm$^3$ |
| Température | 250°C |
| Débit d'hydrogène | 60 Nl/h |
| Débit de charge | 200 cm$^3$/h |

Chacun des catalyseurs est sulfuré avant le test à 350°C pendant 4 heures, et une pression totale de 6MPa par un mélange contenant 2% en poids de Diméthyl-disulfure (DMDS) dans le n-heptane et avec une VVH de 1 h-1 et un débit de 350 NI d'H2 par litre de charge.

Les performances catalytiques des catalyseurs testés sont données dans le tableau 15 suivant. La performance est indiquée par le pourcentage de soufre enlevé.

TABLEAU 15

| Activité des catalyseurs en hydrodésulfuration d'essence | | |
|---|---|---|
| Catalyseur | | % S enlevé |
| ACo | CoMo | 87.2 |
| BCo | CoMoP | 88.3 |
| ECo | CoMoPB | 90.9 |
| HCo | CoMoPBSi | 89.5 |
| ICo | CoMoBSiF | 91.4 |
| JCo | CoMoPBSiF | 91.9 |

Dans le tableau 15, on observe que la performance en hydrodésulfuration d'essence des catalyseurs contenant à la fois le bore et le silicium est dans chaque cas supérieure à la performance des catalyseur ne contenant pas ces deux éléments. Il y a donc un avantage à associer le bore et le silicium. Cet avantage est notable quand le catalyseur contient du P (HCo et JCo) mais il est encore plus important quant le catalyseur ne contient pas de P (ECo et ICo). Dans tous les cas la présence de fluor augmente encore plus l'activité en hydrodésulfuration, et ici également, les résultats sont meilleurs en absence de phosphore.

Les résultats du tableau 15 indiquent donc que l'ajout de bore et de silicium à un catalyseur contenant au moins un élément du groupe VIB et au moins un élément non noble du groupe VIII supportés sur une matrice oxyde amorphe obtenu selon les méthodes de l'invention améliorent notablement les performances du catalyseur en hydrodésulfuration d'essences.

**Revendications**

1. Catalyseur à base d'un précurseur renfermant au moins un métal choisi dans le groupe constitué par les métaux du groupe VIB de la classification périodique des éléments et renfermant en outre au moins un métal du groupe VIII de la classification périodique des éléments, lesdits métaux étant déposés sur un support amorphe ou mal cristallisé, le dit catalyseur étant **caractérisé en ce qu'**on ajoute au précurseur du silicium et du bore.

2. Catalyseur selon la revendication 1 renfermant en outre du phosphore.

3. Catalyseur selon l'une des revendications 1 et 2 renfermant en outre un halogène.

4. Catalyseur selon la revendication 3 dans lequel l'halogène est le fluor.

5. Catalyseur selon l'une des revendications 1 à 4 renfermant en poids par rapport à la masse totale du catalyseur :

   - 3 à 60% d' un métal du groupe VIB,
   - au plus 30% d'un métal du groupe VIII,
   - au moins un support choisi dans le groupe constitué par les supports amorphes, mal cristallisé
   - 0,1 à 20% de bore,

- 0,1 à 20% de silicium
- 0 à 20% de phosphore
- 0 à 20% d'au moins un élément du groupe VIIA.

6. Catalyseur selon la revendication 5 dans lequel le catalyseur renferme en poids 3 à 45% d'un métal du groupe VIB, de préférence 3 à 30%.

7. Catalyseur selon la revendication 5 dans lequel le catalyseur renferme en poids 0,1 à 25% d'un métal du groupe VIII.

8. Catalyseur selon l'une des revendications 1 à 7 dans lequel la teneur en bore est comprise entre 0,1 à 15% poids, de préférence 0,1 à 10% poids et celle en silicium est comprise entre 0,1 à 15% poids, de préférence 0,1 à 10% poids.

9. Catalyseur selon l'une des revendications 1 à 8 renfermant en outre 0,1 à 20% poids de phosphore.

10. Catalyseur selon la revendication 9 renfermant en outre 0,1 à 15% poids et de préférence 0,1 à 10% poids de phosphore.

11. Catalyseur selon l'une des revendications 1 à 10 renfermant en poids 0,1 à 20% d'un halogène.

12. Catalyseur selon l'une des revendications 1 à 10 renfermant en poids 0,1 à 20 % de fluor.

13. Procédé de fabrication d'un catalyseur selon l'une des revendications 1 à 12, dans lequel on introduit isolément ou ensemble, sur une masse catalytique appelée encore précurseur à base d'une matrice poreuse amorphe renfermant au moins un métal du groupe VIB, et au moins un métal du groupe VIII, et éventuellement du phosphore, au moins une solution contenant du bore et au moins une solution contenant du silicium, de préférence une solution renfermant à la fois du bore et du silicium.

14. Utilisation d'un catalyseur selon l'une des revendications 1 à 12 dans une réaction de raffinage ou d'hydroconversion de charges hydrocarbonées.

15. Utilisation d'un catalyseur selon l'une des revendications 1 à 12 dans une réaction d'hydrodésulfuration d'essence, à une température supérieure supérieure ou égale à 200°C, avec une pression supérieure à 0,1 Mpa et de préférence supérieure à 0,2 Mpa, avec une quantité d'hydrogène comprise entre 50 et 1000 normaux litre d'hydrogène par litre de charge et avec une vitesse volumique horaire comprise entre 1 et 20 h-1 et de préférence entre 2 et 20 h-1.

16. Utilisation d'un catalyseur selon l'une des revendications 1 à 12 dans une réaction d'hydrodésulfuration de gazole, à une température supérieure ou égale à 250°C, inférieure à 450°C et de préférence comprise entre 280°C et 430°C, avec une pression supérieure à 0,2 Mpa et de préférence supérieure à 0,5 Mpa, avec une quantité d'hydrogène supérieure ou égale à 50 normaux litres d'hydrogène par litre de charge, de préférence comprise entre 80 et 1000 normaux litre d'hydrogène par litre de charge, avec une vitesse volumique horaire comprise entre 0,1 et 20 h-1, de préférence comprise entre 0,5 et 15 h-1.

17. Utilisation d'un catalyseur selon l'une des revendications 1 à 12 dans une réaction d'hydrogénation d'aromatiques dans les gazoles, à une température supérieure ou égale à 280°C, inférieure à 420°C et de préférence comprise entre 300°C et 400°C, avec une pression supérieure à 1 Mpa et de préférence supérieure à 3 Mpa, avec une quantité d'hydrogène supérieure ou égale à 100 normaux litres d'hydrogène par litre de charge, de préférence comprise entre 200 et 3000 normaux litre d'hydrogène par litre de charge, avec une vitesse volumique horaire comprise entre 0,1 et 10 h-1, de préférence comprise entre 0,2 et 5 h-1.

18. Utilisation d'un catalyseur selon l'une des revendications 1 à 12 dans une réaction d'hydrotraitement de distillats sous vide, à une température supérieure ou égale à 300°C, inférieure à 450°C et de préférence comprise entre 340°C et 440°C, avec une pression supérieure à 2 Mpa et de préférence supérieure à 5 Mpa, avec une quantité d'hydrogène supérieure ou égale à 100 normaux litres d'hydrogène par litre de charge, de préférence comprise entre 200 et 3000 normaux litre d'hydrogène par litre de charge, avec une vitesse volumique horaire comprise entre 0,1 et 5 h-1, de préférence comprise entre 0,2 et 4 h-1.

**19.** Utilisation d'un catalyseur selon l'une des revendications 1 à 12 dans une réaction d'hydrocraquage partiel de coupes hydrocarbonées, à une température supérieure ou égale à 350°C, inférieure à 480°C et de préférence comprise entre 360°C et 460°C, avec une pression supérieure à 2 Mpa et de préférence supérieure à 5 Mpa, avec une quantité d'hydrogène supérieure ou égale à 50 normaux litres d'hydrogène par litre de charge, de préférence comprise entre 100 et 3000 normaux litre d'hydrogène par litre de charge, avec une vitesse volumique horaire comprise entre 0,1 et 5 h-1, de préférence comprise entre 0,1 et 4 h-1.

**20.** Utilisation d'un catalyseur selon l'une des revendications 1 à 12 dans une réaction d'hydrocraquage de coupes hydrocarbonées, à une température comprise entre 360°C et 450°C, avec une pression supérieure à 5 Mpa et de préférence supérieure à 8 Mpa, avec une quantité d'hydrogène supérieure ou égale à 100 normaux litres d'hydrogène par litre de charge, de préférence comprise entre 200 et 3000 normaux litre d'hydrogène par litre de charge, avec une vitesse volumique horaire comprise entre 0,1 et 5 h-1, de préférence comprise entre 0,5 et 4 h-1.

**Claims**

**1.** A catalyst comprising at least one metal selected from the group formed by metals from group VIB of the periodic table, and further containing at least one metal from group VIII of the periodic table, said metals being deposited on a support, said catalyst being **characterized in that** it comprises silicon and boron.

**2.** A catalyst according to claim 1, further comprising phosphorous.

**3.** A catalyst according to claim 1 or claim 2, further comprising a halogen.

**4.** A catalyst according to claim 3, in which the halogen is fluorine.

**5.** A catalyst according to any one of claims 1 to 4 comprising, by weight with respect to the total catalyst mass:

- 3% to 60% of a group VIB metal;
- at most 30% of a group VIII metal;
- at least one support selected from the group formed by amorphous and low crystallinity supports;
- 0.1% to 20% of boron;
- 0.1% to 20% of silicon;
- 0 to 20% of phosphorous;
- 0 to 20% of at least one group VIIA element.

**6.** A catalyst according to claim 5, in which the catalyst comprises 3% to 45% by weight of a group VIB metal, preferably 3% to 30%.

**7.** A catalyst according to claim 5, in which the catalyst comprises 0.1 % to 25% by weight of a group VIII metal.

**8.** A catalyst according to any one of claims 1 to 7, in which the boron content is in the range 0.1% to 15% by weight, preferably 0.1% to 10% by weight, and the silicon content is in the range 0.1 % to 15% by weight, preferably 0.1% to 10% by weight.

**9.** A catalyst according to any one of claims 1 to 8, further comprising 0.1% to 20% by weight of phosphorous.

**10.** A catalyst according to claim 9, further comprising 0.1% to 15% by weight, preferably 0.1% to 10% by weight, of phosphorous.

**11.** A catalyst according to any one of claims 1 to 10, comprising 0.1% to 20% by weight of a halogen.

**12.** A catalyst according to any one of claims 1 to 10, comprising 0.1% to 20% of fluorine.

**13.** A process for the production of a catalyst according to any one of claims 1 to 12, in which at least one solution containing boron and at least one solution containing silicon are introduced in isolation or together into the catalytic mass known as the precursor based on a porous amorphous matrix comprising at least one group VIB metal and at least one group VIII metal, and optionally phosphorous.

14. Use of a catalyst according to any one of claims 1 to 12 or prepared according to claim 13, in a hydrocarbon feed refining or hydroconversion reaction.

15. Use of a catalyst according to any one of claims 1 to 12 or prepared in accordance with claim 13, in a gasoline hydrodesulphuration reaction, at a temperature of 200°C or more, at a pressure of more than 0.1 MPa, preferably more than 0.2 MPa, with a quantity of hydrogen which is in the range 50 to 1000 normal litres of hydrogen per litre of feed and with an hourly space velocity in the range 1 to 20 h$^{-1}$, preferably in the range 2 to 20 h$^{-1}$.

16. Use of a catalyst according to any one of claims 1 to 12 or prepared in accordance with claim 13, in a gas oil hydrodesulphuration reaction, at a temperature of 250°C or more, less than 450°C and preferably in the range 280°C to 430°C, at a pressure of more than 0.2 MPa, preferably more than 0.5 MPa, with a quantity of hydrogen of 50 or more normal litres of hydrogen per litre of feed, preferably 80 to 1000 normal litres of hydrogen per litre of feed, and at an hourly space velocity in the range 0.1 to 20 h$^{-1}$, preferably in the range 0.5 to 15 h$^{-1}$.

17. Use of a catalyst according to any one of claims 1 to 12 or prepared in accordance with claim 13, in a reaction for hydrogenation of aromatic compounds in gas oils, at a temperature of 280°C or more, less than 420°C and preferably in the range 300°C to 400°C, at a pressure of more than 1 MPa, preferably more than 3 MPa, with a quantity of hydrogen of 100 or more normal litres of hydrogen per litre of feed, preferably in the range 200 to 3000 normal litres of hydrogen per litre of feed, and at an hourly space velocity in the range 0.1 to 10 h$^{-1}$, preferably in the range 0.2 to 5 h$^{-1}$.

18. Use of a catalyst according to any one of claims 1 to 12 or prepared in accordance with claim 13, in a reaction for hydrotreatment of vacuum distillates, at a temperature of 300°C or more, less than 450°C and preferably in the range 340°C to 440°C, at a pressure of more than 2 MPa, preferably more than 5 MPa, with a quantity of hydrogen of 100 or more normal litres of hydrogen per litre of feed, preferably in the range 200 to 3000 normal litres of hydrogen per litre of feed, and at an hourly space velocity in the range 0.1 to 5 h$^{-1}$, preferably in the range 0.2 to 4 h$^{-1}$.

19. Use of a catalyst according to any one of claims 1 to 12 or prepared in accordance with claim 13, in a reaction for partial hydrocracking of hydrocarbon cuts, at a temperature of 350°C or more, less than 480°C and preferably in the range 360°C to 460°C, at a pressure of more than 2 MPa, preferably more than 5 MPa, with a quantity of hydrogen of 50 or more normal litres of hydrogen per litre of feed, preferably in the range 100 to 3000 normal litres of hydrogen per litre of feed, and at an hourly space velocity in the range 0.1 to 5 h$^{-1}$, preferably in the range 0.1 to 4 h$^{-1}$.

20. Use of a catalyst according to any one of claims 1 to 12 or prepared in - accordance with claim 13, in a reaction for hydrocracking hydrocarbon cuts, at a temperature in the range 360°C to 450°C, at a pressure of more than 5 MPa, preferably more than 8 MPa, with a quantity of hydrogen of 100 or more normal litres of hydrogen per litre of feed, preferably in the range 200 to 3000 normal litres of hydrogen per litre of feed, and at an hourly space velocity in the range 0.1 to 5 h$^{-1}$, preferably in the range 0.5 to 4 h$^{-1}$.

**Patentansprüche**

1. Katalysator auf der Basis eines Vorläufers, der wenigstens ein Metall einschließt, das aus der durch die Metalle der Gruppe VIB des Periodensystems der Elemente gebildeten Gruppe gewählt ist und im übrigen wenigstens ein Metall der Gruppe VIII des Periodensystems der Elemente einschließt, wobei diese Metalle auf einem amorphen oder schlecht kristallisierten Träger abgeschieden sind, wobei der Katalysator sich dadurch auszeichnet, dass man dem Vorläufer Silizium und Bor zusetzt.

2. Katalysator nach Anspruch 1, der im übrigen Phosphor einschließt.

3. Katalysator nach einem der Ansprüche 1 und 2, der im übrigen ein Halogen einschließt.

4. Katalysator nach Anspruch 3, bei dem das Halogen Fluor ist.

5. Katalysator nach einem der Ansprüche 1 bis 4, der in Gewicht bezogen auf die Gesamtmasse des Katalysators einschließt:

- 3 bis 60 % eines Metalls der Gruppe VIB,

- höchstens 30 % eines Metalls der Gruppe VIII,

- wenigstens einen Träger, der aus der durch die amorphen Träger gebildeten Gruppe gewählt und schlecht kristallisiert ist

- 0,1 bis 20 % Bor,

- 0,1 bis 20 % Silizium

- 0 bis 20 % Phosphor

- 0 bis 20 % wenigstens eines Elements der Gruppe VIIA.

6. Katalysator nach Anspruch 5, bei dem der Katalysator in Gewicht 3 bis 45 % eines Metalls der Gruppe VIB, vorzugsweise 3 bis 30 % einschließt.

7. Katalysator nach Anspruch 5, bei dem der Katalysator in Gewicht 0,1 bis 25 % eines Metalls der Gruppe VIII einschließt.

8. Katalysator nach einem der Ansprüche 1 bis 7, bei dem der Bor-Gehalt zwischen 0,1 und 15 Gew.-%, bevorzugt zwischen 0,1 und 10 Gew.-% und der an Silizium zwischen 0,1 und 15 Gew.-%, bevorzugt zwischen 0,1 und 10 Gew.-% liegt.

9. Katalysator nach einem der Ansprüche 1 bis 8, der im übrigen 0,1 bis 20 Gew.-% Phosphor einschließt.

10. Katalysator nach Anspruch 9, der im übrigen 0,1 bis 15 Gew.-%, bevorzugt 0,1 bis 10 Gew.-% Phosphor einschließt.

11. Katalysator nach einem der Ansprüche 1 bis 10, der in Gewicht 0,1 bis 20 % eines Halogens einschließt.

12. Katalysator nach einem der Ansprüche 1 bis 10, der in Gewicht 0,1 bis 20 % Fluor einschließt.

13. Verfahren zur Herstellung eines Katalysators nach einem der Ansprüche 1 bis 12, bei dem man isoliert oder gemeinsam auf eine katalytische hier noch Vorläufer genannte Masse auf der Basis einer porösen amorphen Matrix, die wenigstens ein Metall der Gruppe VIB und wenigstens ein Metall der Gruppe VIII und gegebenenfalls Phosphor einschließt, wenigstens eine Bor enthaltende Lösung und wenigstens eine Silizium enthaltende Lösung, bevorzugt eine gleichzeitig Bor und Silizium enthaltende Lösung gibt.

14. Verwendung eines Katalysators nach einem der Ansprüche 1 bis 12 bei einer Raffinier- oder Hydroumwandlungsreaktion von kohlenwasserstoffhaltigen Chargen.

15. Verwendung eines Katalysators nach einem der Ansprüche 1 bis 12 bei einer Reaktion der Hydrodesulfurierung von Benzin bei einer Temperatur oberhalb oder gleich 200°C und einem Druck oberhalb von 0,1 Mpa und bevorzugt oberhalb von 0,2 Mpa, mit einer Wasserstoffmenge zwischen 50 und 1000 Normalliter Wasserstoff pro Liter Charge und mit einer stündlichen Volumengeschwindigkeit zwischen 1 und 20 $h^{-1}$ und bevorzugt zwischen 2 und 20 $h^{-1}$.

16. Verwendung eines Katalysators nach einem der Ansprüche 1 bis 12 bei einer Reaktion der Hydrodesulfurierung von Gasöl bei einer Temperatur oberhalb oder gleich 250°C, unterhalb 450°C und bevorzugt zwischen 280°C und 430°C, bei einem Druck oberhalb von 0,2 Mpa und bevorzugt oberhalb von 0,5 Mpa, mit einer Wasserstoffmenge oberhalb oder gleich 50 Normalliter Wasserstoff pro Liter Charge, bevorzugt zwischen 80 und 1000 Normalliter Wasserstoff pro Liter Charge und einer stündlichen Volumengeschwindigkeit zwischen 0,1 und 20 $h^{-1}$, bevorzugt zwischen 0,5 und 15 $h^{-1}$.

17. Verwendung eines Katalysators nach einem der Ansprüche 1 bis 12 bei einer Reaktion der Hydrierung von Aromaten in den Gasölen bei einer Temperatur oberhalb oder gleich 280°C, unterhalb von 420°C und bevorzugt zwischen 300°C und 400°C, bei einem Druck oberhalb 1 Mpa, und bevorzugt oberhalb von 3 Mpa, mit einer Wasserstoffmenge oberhalb oder gleich 100 Normalliter Wasserstoff pro Liter Charge, bevorzugt zwischen 200 und 3000 Normalliter Wasserstoff pro Liter Charge und einer stündlichen Raumgeschwindigkeit zwischen 0,1 und 10 h$^{-1}$, bevorzugt zwischen 0,2 und 5 h$^{-1}$.

18. Verwendung eines Katalysators nach einem der Ansprüche 1 bis 12 bei einer Hydrotreatment-Reaktion von Destillaten unter Vakuum bei einer Temperatur oberhalb oder gleich 300°C, unterhalb von 450°C und bevorzugt zwischen 340°C und 440°C, bei einem Druck oberhalb von 2 Mpa und bevorzugt oberhalb von 5 Mpa sowie einer Wasserstoffmenge oberhalb oder gleich 100 Normalliter Wasserstoff pro Liter Charge, bevorzugt zwischen 200 und 3000 Normalliter Wasserstoff pro Liter Charge und einer stündlichen Raumgeschwindigkeit zwischen 0,1 und 5 h$^{-1}$, bevorzugt zwischen 0,2 und 4 h$^{-1}$.

19. Verwendung eines Katalysators nach einem der Ansprüche 1 bis 12 bei einer Reaktion des partiellen Hydrocrakkens von kohlenwasserstoffhaltigen Schnitten bei einer Temperatur oberhalb oder gleich 350°C, unterhalb von 480°C und bevorzugt zwischen 360°C und 460°C, bei einem Druck oberhalb von 2 Mpa und bevorzugt oberhalb von 5 Mpa sowie einer Wasserstoffmenge oberhalb oder gleich 50 Normalliter Wasserstoff pro Liter Charge, bevorzugt zwischen 100 und 3000 Normalliter Wasserstoff pro Liter Charge und einer stündlichen Raumgeschwindigkeit zwischen 0,1 und 5 h 1, bevorzugt zwischen 0,1 und 4 h$^{-1}$.

20. Verwendung eines Katalysators nach einem der Ansprüche 1 bis 12 bei einer Reaktion des Hydrocrackens von kohlanwasserstoffhaltigen Schnitten bei einer Temperatur zwischen 360°C und 450°C, bei einem Druck oberhalb von 5 Mpa und bevorzugt oberhalb von 8 Mpa sowie einer Wasserstoffmenge oberhalb oder gleich 100 Normalliter Wasserstoff pro Liter Charge, bevorzugt zwischen 200 und 3000 Normalliter Wasserstoff pro Liter Charge und einer stündlichen Raumgeschwindigkeit zwischen 0,1 und 5 h$^{-1}$.bevorzugt zwischen 0,5 und 4 h$^{-1}$.